# EUROPEAN PATENT APPLICATION

(11) **EP 4 001 217 A1**
(43) Date of publication of application: **25.05.2022**
(21) Application number: 20844051.1
(22) Date of filing: 31.01.2020
(51) Int. Cl.: C01D 15/02, C01D 15/08, C01B 25/30

(54) **METHOD FOR PRODUCING LITHIUM HYDROXIDE**

(30) Priority: 19.07.2019 KR 20190087629
(71) Applicant: Chon, Uong, Seoul 06666 (KR)
(72) Inventor: Chon, Uong, Seoul 06666 (KR)
(74) Representative: Grünecker Patent- und Rechtsanwälte PartG mbB
(86) International application number: PCT/KR2020/001504
(87) International publication number: WO 2021/015378

(57) **Abstract**

The present invention relates to a method for producing lithium hydroxide, and provides a method for producing lithium hydroxide, the method comprising the steps of: preparing lithium carbonate and calcium hydroxide; and reacting the lithium carbonate and the calcium hydroxide in a solvent to obtain an aqueous solution of lithium hydroxide, wherein in the step of reacting the lithium carbonate and the calcium hydroxide in a solvent to obtain an aqueous solution of lithium hydroxide, the concentration of lithium carbonate in the solvent is 110 g/L or less.

## Description

### [Technical Field]

The present invention relates to a method of producing lithium hydroxide.

### [Background Art]

Recently, lithium secondary batteries are not only being variously used as a power source for IT devices such as mobile phones and laptop computers, but also are attracting attention as a power source for electric vehicles.

It is expected that in the near future, as the electric vehicle market and the renewable energy electricity storage system market are greatly activated, the demand for lithium secondary batteries will increase rapidly.

Lithium hydroxide is used as a raw material for positive electrode materials, negative electrode materials, and electrolytes, which are important components of electric vehicles and electricity storage systems. Therefore, in order to smoothly supply electric vehicles and electricity storage systems, which are expected to be in greatly increasing demand, to the market, a technique capable of economically producing lithium hydroxide is required.

In general, by naturally evaporating natural brine to concentrate lithium to a high concentration of about 60 g/L and then adding a carbonate, lithium is extracted in the form of lithium carbonate (Li₂CO₃) from natural brine containing about 0.2 to 1.5 g/L of lithium. In order to prepare lithium hydroxide from the lithium carbonate extracted as thus, various methods have been devised.

Korean Patent Registration No. 10-0725589 discloses a technique of obtaining lithium hydroxide by eluting only the soluble amount (13 g/L) of lithium carbonate from lithium carbonate waste to obtain an aqueous lithium carbonate solution having a lithium concentration of 2.5 g/L and reacting the solution with calcium hydroxide to prepare a low-concentration aqueous lithium hydroxide solution having a lithium concentration of 2.5 g/L or less and then evaporating water therefrom.

However, when this method is used, the lithium concentration of the aqueous lithium hydroxide solution is low, so high evaporation costs are incurred.

In addition, Korean Patent Registration No. 10-1873933 discloses a method of producing a lithium hydroxide powder by mixing a lithium carbonate slurry and a calcium hydroxide slurry, reacting at 70 °C for two hours, filtering to obtain an aqueous lithium carbonate solution having a lithium concentration of 3.75 g/L or more, and evaporating water therefrom. However, since the reaction solution should be heated to 70 °C in this method to react the lithium carbonate and lithium hydroxide, a lot of energy costs are incurred, and since a large amount of lithium hydroxide is eluted and lost during a washing process for purifying lithium hydroxide, a lithium recovery rate is lowered.

Meanwhile, in Korean Patent Registration No. 10-1179505, lithium carbonate is dissolved in water to prepare an aqueous lithium carbonate solution, and after adding hydrogen peroxide, water is evaporated to obtain lithium peroxide. Subsequently, in the disclosed production method, the obtained lithium peroxide is reacted with water to obtain lithium hydroxide monohydrate. However, since this method uses highly oxidizing hydrogen peroxide, there is a risk of explosion, and in order to prevent the explosion, the reaction should be carried out at a very low lithium concentration, so a lot of energy costs are incurred to crystallize lithium hydroxide.

Japanese Patent Registration No. 05769409 provides a method of producing lithium hydroxide by reacting lithium carbonate with an organic acid to prepare an organic acid lithium solution and electrodialyzing the solution in electrodialysis equipment equipped with a bipolar membrane. However, this method is not economical because it uses expensive electrodialysis equipment and excessive electricity, and it is expensive and difficult to maintain and repair the bipolar membrane.

As described above, when using an existing method of producing lithium hydroxide using lithium carbonate, there are problems such as high energy costs, low lithium recovery rate, and high equipment investment costs, so economic efficiency is low. Therefore, there is an urgent need to develop a technique capable of economically producing lithium hydroxide using lithium carbonate.

Therefore, in the present invention, a method of economically producing lithium hydroxide from lithium carbonate using a small amount of energy and with a high lithium recovery rate is proposed.

### [Disclosure]

### [Technical Problem]

The present invention is directed to providing a method of economically producing lithium hydroxide.

### [Technical Solution]

One aspect of the present invention provides a method of producing lithium hydroxide, which includes the steps of: preparing lithium carbonate and calcium hydroxide; and reacting the lithium carbonate and the calcium hydroxide in a solvent and thus obtaining an aqueous lithium hydroxide solution, wherein, in the step of reacting the lithium carbonate and the calcium hydroxide in a solvent and thus obtaining an aqueous lithium hydroxide solution, the concentration of lithium carbonate in the solvent is 110 g/L or less.

More specifically, the concentration of lithium carbonate in the solvent may be 25 to 110 g/L.

More specifically, the concentration of lithium carbonate in the solvent may be 25 to 80 g/L.

The concentration of calcium hydroxide in the solvent may be 27 g/L to 115 g/L. The concentration of calcium hydroxide may be related to the above-described concentration of lithium carbonate. That is, the input amount of calcium hydroxide that can be reacted may be controlled according to the amount of lithium carbonate.

A description of the input amount of lithium carbonate will be provided below.

In the step of reacting the lithium carbonate and the calcium hydroxide in a solvent and thus obtaining an aqueous lithium hydroxide solution, a reaction time may be one to five hours. A description of the reaction time will be provided below.

In the step of reacting the lithium carbonate and the calcium hydroxide in a solvent and thus obtaining an aqueous lithium hydroxide solution, a reaction temperature may be room temperature. That is, energy may not be additionally consumed to activate the reaction atmosphere.

The method may additionally include the steps of: concentrating the aqueous lithium hydroxide solution and separating the same into solid lithium hydroxide and a first filtrate; and recovering lithium from the first filtrate, after the step of reacting the lithium carbonate and the calcium hydroxide in a solvent and thus obtaining an aqueous lithium hydroxide solution.

The method may additionally include the steps of: washing the solid lithium hydroxide; and recovering lithium from a filtrate of a washing solution used for washing the lithium hydroxide, after the step of concentrating the aqueous lithium hydroxide solution and separating the same into solid lithium hydroxide and a first filtrate.

The step of recovering lithium from the first filtrate or the step of recovering lithium from a filtrate of a washing solution used for washing the lithium hydroxide may include a step of adding a carbonic acid feed material to the first filtrate or the filtrate of the washing solution and thus recovering lithium in the form of lithium carbonate.

The method may additionally include the steps of: separating solid lithium carbonate and a second filtrate; washing the solid lithium carbonate; and recovering lithium from the second filtrate or a filtrate of a washing solution used for washing the solid lithium carbonate, after the step of adding a carbonic acid feed material to the first filtrate or the filtrate of the washing solution and thus recovering lithium in the form of lithium carbonate.

The step of recovering lithium from the second filtrate or a filtrate of a washing solution used for washing the solid lithium carbonate may include a step of adding a phosphorus feed material to the second filtrate or the filtrate of the washing solution used for washing the solid lithium carbonate and thus recovering lithium in the form of lithium phosphate.

The step of recovering lithium from the first filtrate or the step of recovering lithium from a filtrate of a washing solution used for washing the lithium hydroxide may include a step of adding a phosphorus feed material to the first filtrate or the filtrate of the washing solution and thus recovering lithium in the form of lithium phosphate.

### [Advantageous Effects]

One aspect of the present invention can provide a method of economically producing lithium hydroxide by reducing energy costs, equipment investment costs, and lithium loss.

### [Description of Drawings]

FIG. 1 shows a lithium hydroxide conversion rate of a reaction solution filtrate obtained after adding various amounts of lithium carbonate and calcium hydroxide to 1 L of distilled water and stirring at room temperature (21 °C) for five hours.
FIG. 2 shows the lithium concentration of a reaction solution filtrate collected, at 30-minute intervals, during preparing a high-concentration lithium solution having a lithium concentration of 10 g/L by adding 54 g of lithium carbonate and 57 g of calcium hydroxide to 1 L of water at room temperature (21 °C) and stirring for five hours.
FIG. 3 shows an X-ray diffraction pattern obtained by an X-ray diffraction analyzer after adding 54 g of lithium carbonate and 57 g of calcium hydroxide to 1 L of water at room temperature (21 °C) and stirring for five hours to prepare a high-concentration lithium solution having a lithium concentration of 10 g/L, washing an obtained reaction precipitate, and then drying the same at 105 °C for 24 hours.
FIG. 4 shows an X-ray diffraction pattern measured after inputting a high-concentration lithium hydroxide solution having a lithium concentration of 9.4 g/L into a flask under a reduced pressure of 35 mbar, immersing the flask in 50 °C hot water, evaporating water while rotating the flask to precipitate lithium hydroxide, performing filtration, and washing and drying the precipitated lithium hydroxide to prepare a lithium hydroxide powder.
FIG. 5 shows an X-ray diffraction pattern of a reaction precipitate obtained by adding 340 g of sodium carbonate to 1 L of a mixed solution of a lithium hydroxide filtrate and a lithium hydroxide washing solution filtrate and stirring for four hours at room temperature.
FIG. 6 shows an X-ray diffraction pattern of a reaction precipitate obtained by adding 351 g of sodium phosphate to 1 L of a mixed solution of a lithium hydroxide filtrate and a lithium hydroxide washing solution filtrate and stirring for four hours at room temperature.
FIG. 7 shows an X-ray diffraction pattern of a reaction precipitate obtained by adding 26 g of sodium phosphate to 1 L of a mixed solution of a lithium carbonate filtrate and a lithium carbonate washing solution filtrate and stirring for four hours at room temperature.

### [Modes of the Invention]

Hereinafter, embodiments of the present invention will be described in detail. However, the exemplary embodiments are provided as examples, and the present invention is not limited thereto, and the present invention is only defined by the scope of the claims to be described below.

According to one embodiment of the present invention, a reaction between lithium carbonate and calcium hydroxide in a suspension at room temperature (e.g., temperature of 20 to 25 °C) may proceed according to the following Reaction Scheme 1.

[Reaction Scheme 1] Li₂CO₃ + Ca(OH)₂ → 2Li⁺ + 2OH⁻ + CaCO₃

That is, when the lithium carbonate reacts with calcium hydroxide, an aqueous lithium hydroxide solution is formed, and calcium carbonate is precipitated.

In order to reduce the energy costs of the process, the reaction may be carried out at room temperature.

The room temperature reaction solution may be filtered to separate the precipitated calcium carbonate and obtain a lithium hydroxide solution.

The solubility of lithium hydroxide is 128 g/L, which is 37.1 g/L if converted to lithium concentration.

Therefore, in order to separate solid lithium hydroxide from the lithium hydroxide solution by precipitating the same, the aqueous lithium hydroxide solution should be heated to evaporate water to attain a lithium concentration of 37.1 g/L or more.

Therefore, when the lithium concentration of the lithium hydroxide solution is low, since a large amount of water should be evaporated, there is a problem in that energy costs increase. However, when the lithium concentration of the aqueous lithium hydroxide solution is excessively increased by adding excessive lithium carbonate and calcium hydroxide powder to reduce water evaporation, the viscosity of the reaction solution is increased, so the reaction is not smoothly carried out, and excessive calcium carbonate is precipitated, so it is difficult to perform filtration, and the amount of interlayer water increases, so a large amount of lithium is lost.

In addition, since a large amount of lithium and carbonic acid are discharged into an aqueous solution, lithium carbonate is re-precipitated from the lithium hydroxide solution, so there are problems that the efficiency of the reaction decreases and lithium loss increases.

Therefore, in the present invention, the amount of lithium carbonate input into 1 L of the reaction solution is limited to 110 g/L or less. More specifically, the amount may be in the range of 25 g to 110 g.

According to one embodiment of the present invention, the precipitation of a lithium hydroxide powder due to the water evaporation and concentration of the lithium hydroxide solution may proceed according to the following Reaction Scheme 2 or Reaction Scheme 3.

[Reaction Scheme 2] Li⁺ + OH⁻ → LiOH

[Reaction Scheme 3] Li⁺ + OH⁻ + H₂O → LiOHH₂O

According to one embodiment of the present invention, the lithium hydroxide precipitation solution may be filtered and thus separated into lithium hydroxide (solid phase) and a filtrate.

According to one embodiment of the present invention, the lithium hydroxide precipitate may be washed by mixing with water. The washing solution in which the precipitated lithium hydroxide and water are mixed may be filtered and thus separated into lithium hydroxide and a washing solution filtrate.

Since lithium hydroxide has a high solubility of 128 g/L as described above, the lithium hydroxide filtrate according to one embodiment of the present invention contains a large amount of residual lithium and thus has a lithium concentration of 37 g/L, and the lithium hydroxide washing solution filtrate also has a high lithium concentration due to the presence of a large amount of lithium.

Therefore, when lithium is not recovered from the lithium hydroxide filtrate and the washing solution filtrate, since a large amount of lithium is lost, the efficiency and economic efficiency of the lithium hydroxide production process are lowered.

Therefore, it is essential to recover lithium from the lithium hydroxide filtrate and the washing solution filtrate containing a large amount of lithium for the purpose of suppressing the loss of lithium in the lithium hydroxide production process.

When recovering lithium from the lithium hydroxide filtrate and the washing solution filtrate, the lithium may be recovered using lithium carbonate (solubility: 13 g/L) or lithium phosphate (solubility: 0.39 g/L), which has a significantly lower solubility than lithium hydroxide and thus can precipitate most of the lithium.

When a carbonic acid feed material is added to a lithium hydroxide solution in which the lithium hydroxide filtrate and the lithium hydroxide washing solution filtrate according to one embodiment of the present invention are mixed, lithium carbonate precipitates, and therefore, lithium can be effectively recovered.

The lithium carbonate precipitation reaction may proceed as shown in the following Reaction Scheme 4.

[Reaction Scheme 4] 2Li⁺ + 2OH⁻ + Na₂CO₃ → Li₂CO₃ + 2Na⁺ + 2OH⁻

Sodium carbonate, which is one example of a carbonic acid feed material, reacts with lithium at room temperature to produce and precipitate lithium carbonate.

Specific examples of the carbonic acid feed material are carbon dioxide gas and a carbonate.

More specifically, the carbonate may be sodium bicarbonate, sodium carbonate, potassium bicarbonate, potassium carbonate, ammonium carbonate, or a combination thereof.

The input amount of the carbonic acid feed material may be one equivalent or more with respect to the lithium content of the lithium hydroxide solution. When the above range is satisfied, it may be advantageous in terms of a reaction rate.

The precipitated lithium carbonate may be separated from the reaction solution by filtration.

The step of recovering lithium by producing and precipitating lithium carbonate by adding a carbonic acid feed material to the lithium hydroxide solution may be performed at room temperature.

After obtaining lithium carbonate as thus, the lithium carbonate may be filtered and washed.

In this case, residual lithium may be present in the filtrate and a washing solution filtrate. This residual lithium can be recovered using lithium phosphate, which has a lower solubility than lithium carbonate.

A method for recovering lithium phosphate will be described below.

In addition, lithium can be recovered in the form of lithium phosphate by adding a phosphorus feed material to a lithium hydroxide solution in which the lithium hydroxide filtrate and the lithium hydroxide washing solution filtrate according to one embodiment of the present invention are mixed.

The lithium phosphate precipitation reaction may proceed as shown in the following Reaction Scheme 5.

[Reaction Scheme 5] 3Li⁺ + 3OH⁻ + Na₃PO₄ → Li₃PO₄ + 3Na⁺ + 3OH⁻

Sodium phosphate, which is one example of a phosphorus feed material, reacts with lithium at room temperature to produce and precipitate lithium phosphate.

Specific examples of the phosphorus feed material are phosphorus, phosphoric acid, phosphates, and phosphorus-containing solutions.

Specific examples of the phosphate are potassium phosphate, sodium phosphate, and ammonium phosphate (specifically, for example, the ammonium phosphate may be (NR₄)₃PO₄, the R may be independently hydrogen, deuterium, or a substituted or unsubstituted C1-C10 alkyl group).

More specifically, the phosphate may be monopotassium phosphate, dipotassium phosphate, tripotassium phosphate, monobasic sodium phosphate, dibasic sodium phosphate, tribasic sodium phosphate, aluminum phosphate, zinc phosphate, ammonium polyphosphate, sodium hexametaphosphate, monocalcium phosphate, dicalcium phosphate, tricalcium phosphate, or the like.

The phosphorus feed material may be a phosphorus-containing aqueous solution. When the phosphorus feed material is a phosphorus-containing aqueous solution, it can easily react with the lithium contained in the lithium hydroxide solution to produce and precipitate lithium phosphate.

The input amount of the phosphorus feed material may be one equivalent or more with respect to the lithium content of the lithium hydroxide solution. When the above range is satisfied, it may be advantageous in terms of a reaction rate.

The precipitated lithium phosphate may be separated from the reaction solution by filtration.

In addition, the step of recovering residual lithium by precipitating the same as lithium phosphate by adding a phosphorus feed material to the lithium hydroxide solution may be performed at room temperature.

In the present specification, room temperature does not mean a particular temperature, and means a temperature without the addition of external energy. Therefore, the room temperature may vary according to place and time.

Hereinafter, exemplary embodiments of the present invention and comparative examples will be described. However, the following exemplary embodiments are only examples of the present invention, and the present invention is not limited thereto.

### [Example 1]

In order to measure a lithium hydroxide conversion rate of lithium carbonate according to the input amount of lithium carbonate when preparing an aqueous lithium hydroxide solution according to the above Reaction Scheme 1, lithium carbonate and calcium hydroxide were added to 1 L of water as shown in Table 1 and stirred for five hours at room temperature (21 °C).

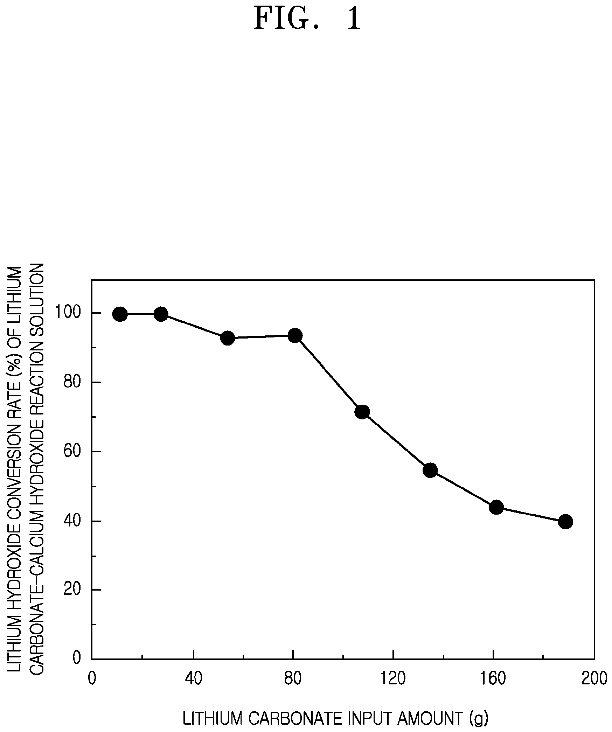

After the reaction was completed, reaction solution samples were collected, and after filtering the samples, the lithium concentration of reaction solution filtrates was measured. Using the lithium carbonate input amount of each reaction solution and the lithium concentration of the solution after the completion of the reaction, a conversion rate of lithium carbonate to lithium hydroxide was calculated, and the results are shown in Table 1 and FIG. 1.

Referring to FIG. 1, it can be seen that when the lithium carbonate input amount was 80 g or less, most of the input lithium carbonate was converted to lithium hydroxide and therefore, the lithium hydroxide conversion rate was almost 100%.

**[Table 1]**

| | | | | | | | | |
|---|---|---|---|---|---|---|---|---|
| Lithium carbonate input amount (g) | 10.75 | 26.88 | 53.77 | 80.65 | 107.53 | 134.41 | 161.30 | 188.18 |
| Calcium hydroxide input amount (g) | 11.35 | 28.37 | 56.75 | 85.12 | 113.50 | 141.87 | 170.24 | 198.62 |
| Lithium concentration of reaction solution filtrate (mg/L) | 1,997 | 4,988 | 9,308 | 14,038 | 14,295 | 13,741 | 13,231 | 13,913 |
| Lithium hydroxide conversion (%) | 99.85 | 99.76 | 93.08 | 93.59 | 71.48 | 54.96 | 44.10 | 39.75 |

On the other hand, when the lithium carbonate input amount was 80 g or more, there was a tendency that the lithium hydroxide conversion rate decreased, and when the lithium carbonate input amount was 188 g, it was observed that the lithium hydroxide conversion rate sharply decreased to 39.8%. From these results, it was confirmed that when an aqueous lithium hydroxide solution was prepared as shown in the above Reaction Scheme 1, it is preferable to limit the lithium carbonate input amount within a certain range.

### [Example 2]

In order to prepare a high-concentration lithium hydroxide solution, 54 g of lithium carbonate and 57 g of calcium hydroxide were added to 1 L of distilled water and stirred at room temperature (21 °C) for five hours.

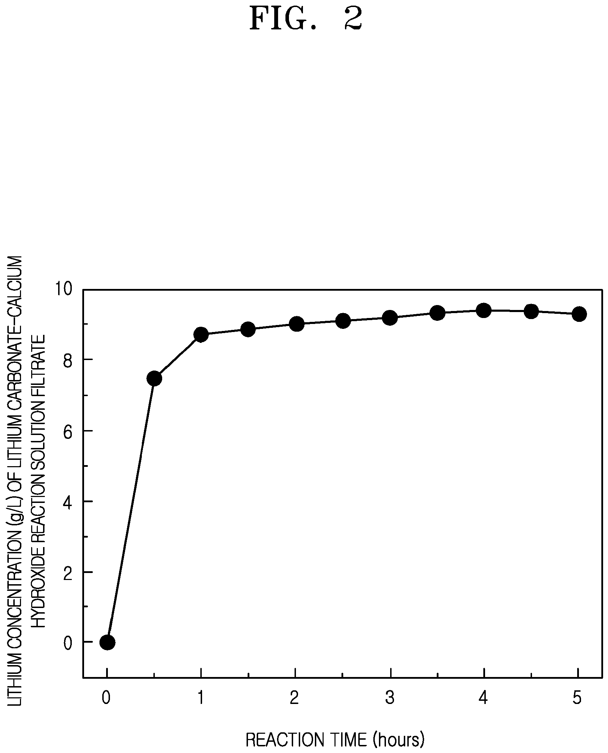

Reaction solution samples were collected at 30-minute intervals, and after filtering the samples, pH and lithium concentration were measured. The results are shown in Table 2 below and FIG. 2. Referring to FIG. 2, it can be seen that there was a tendency that the concentration of residual lithium in the reaction solution gradually increased as the reaction time increased, but after the reaction time exceeded four hours, the lithium concentration did not increase any more.

From these results, it can be seen that lithium carbonate reacted with calcium hydroxide at room temperature to produce lithium hydroxide. Meanwhile, the precipitate obtained by filtering the reaction solution was washed with distilled water and then dried at 105 °C for 24 hours, and a mineral phase was examined using an X-ray diffraction analyzer.

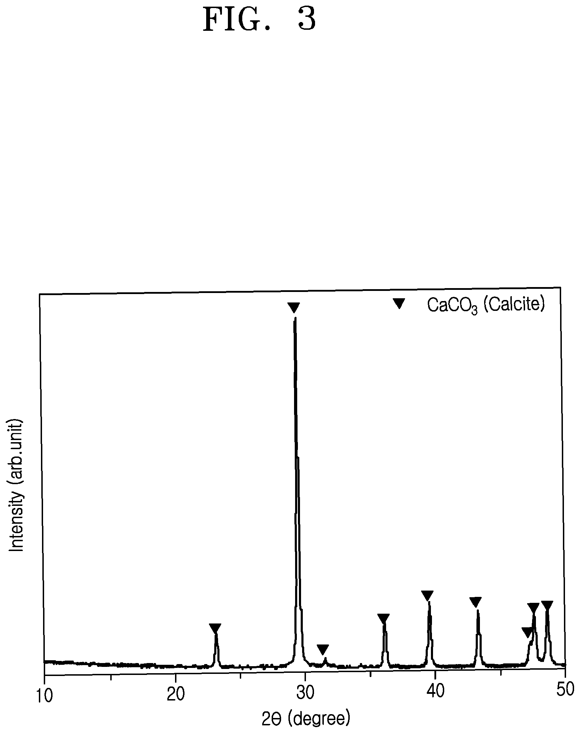

Referring to FIG. 3, it can be seen that lithium carbonate and calcium hydroxide reacted to produce calcium carbonate. As described above, it was confirmed that it is possible to economically produce a high-concentration aqueous lithium hydroxide solution using lithium carbonate and calcium hydroxide at room temperature with simple equipment at low energy costs.

**[Table 2]**

| Reaction time (hours) | 0 | 0.5 | 1 | 1.5 | 2 | 2.5 | 3 | 3.5 | 4 | 4.5 | 5 |
|---|---|---|---|---|---|---|---|---|---|---|---|
| Lithium concentration of reaction solution filtrate (mg/L) | 0 | 7,516 | 8,767 | 8,913 | 9,040 | 9,121 | 9,230 | 9,357 | 9,441 | 9,415 | 9,335 |

### [Example 3]

To prepare a lithium hydroxide monohydrate (LiOHH₂O) powder, the high-concentration lithium hydroxide solution was input into a flask under a reduced pressure of 35 mbar, and the flask was immersed in 50 °C hot water and rotated to evaporate water, thus concentrating lithium.

As the water evaporated, the lithium concentration of the lithium hydroxide solution increased, and after the lithium concentration reached 37 g/L, lithium hydroxide started to precipitate.

An evaporation slurry in which lithium hydroxide was precipitated was separated into lithium hydroxide precipitate and a filtrate through filtration. To wash the filtered lithium hydroxide, 100 g of the filtered lithium hydroxide was mixed with 100 ml of distilled water and stirred. After stirring for one hour, a lithium hydroxide washing solution was filtered and thus separated into lithium hydroxide and a washing solution filtrate.

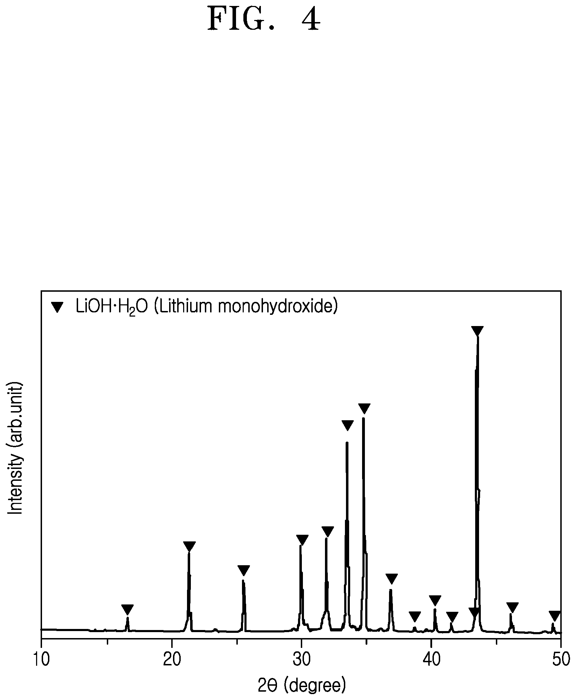

After the washing was completed, the lithium hydroxide was dried at room temperature in a vacuum desiccator, and after the drying was completed, a mineral phase of the lithium hydroxide powder was analyzed using an X-ray diffraction analyzer, and the results are shown in FIG. 4.

### [Example 4]

The lithium concentration of the lithium hydroxide filtrate and the lithium hydroxide washing solution filtrate of Example 3 was analyzed, and the results are shown in Table 3.

**[Table 3]**

| Classification | Lithium concentration (mg/L) |
|---|---|
| Lithium hydroxide filtrate | 37,100 |
| Lithium hydroxide washing solution filtrate | 36,800 |

It can be seen that the lithium hydroxide filtrate and the lithium hydroxide washing solution filtrate contained a large amount of lithium and thus had very high lithium concentrations of 37.1 g/L and 36.8 g/L, respectively.

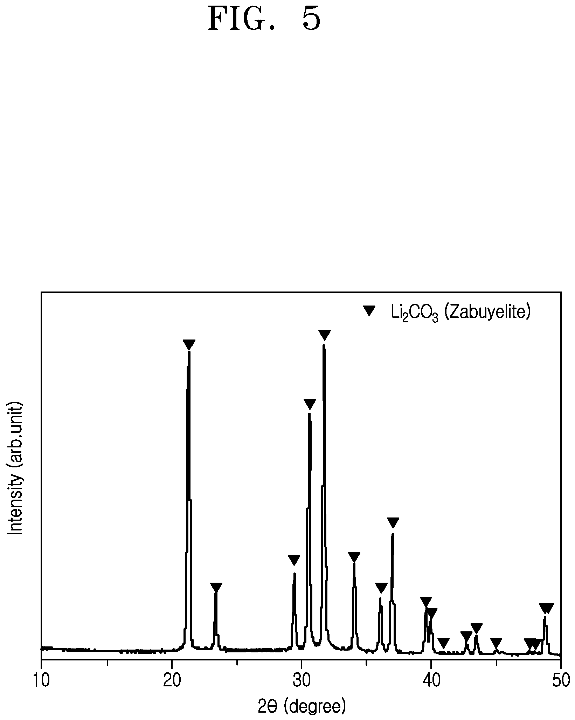

Therefore, in order to recover lithium therefrom, the lithium hydroxide filtrate and the lithium hydroxide washing solution filtrate were mixed. After adding 340 g/L of sodium carbonate to the mixed solution, the resultant was stirred at room temperature for four hours to precipitate lithium carbonate. The precipitated lithium carbonate was filtered, washed, and dried, and subsequently, a mineral phase thereof was analyzed using an X-ray diffraction analyzer, and the results are shown in FIG. 5.

The following Table 4 shows the lithium concentration of the mixed solution of the lithium hydroxide filtrate and the lithium hydroxide washing solution filtrate and the lithium concentration of a reaction solution filtrate after adding, in order to recover lithium contained in the mixed solution, 340 g of sodium carbonate to 1 L of the mixed solution and stirring at room temperature for four hours and thereby precipitating lithium carbonate.

**[Table 4]**

| Classification | Lithium concentration (mg/L) |
|---|---|
| Mixed solution of lithium hydroxide filtrate and lithium hydroxide washing solution filtrate | 36,800 |
| Mixed solution of lithium hydroxide filtrate and lithium hydroxide washing solution filtrate, after adding sodium carbonate | 2,900 |
| Lithium recovery rate | 92.1% |

As shown in Table 4, as a result of precipitating lithium carbonate by adding sodium carbonate to the lithium hydroxide precipitation filtrate and the lithium hydroxide washing solution filtrate, lithium was recovered with a high recovery rate of 92.1%.

Therefore, since most of the large amount of lithium contained in the lithium hydroxide filtrate and the washing solution filtrate was recovered in the form of lithium carbonate at room temperature, it was possible to effectively prevent a large amount of lithium loss that may occur in the lithium hydroxide production process with simple equipment at low energy costs.

### [Example 5]

The following Table 5 shows the lithium concentration of the mixed solution of the lithium hydroxide filtrate and the lithium hydroxide washing solution filtrate and the lithium concentration of a reaction solution filtrate after adding, in order to recover lithium contained in the mixed solution, 351 g of sodium phosphate to 1 L of the mixed solution and stirring at room temperature for four hours and thereby precipitating lithium phosphate.

**[Table 5]**

| Classification | Lithium concentration (mg/L) |
|---|---|
| Mixed solution of lithium hydroxide filtrate and lithium hydroxide washing solution filtrate | 36,800 |
| Mixed solution of lithium hydroxide filtrate and lithium hydroxide washing solution filtrate, after adding sodium phosphate | 700 |
| Lithium recovery rate | 98.1% |

It was observed that the lithium hydroxide filtrate and the lithium hydroxide washing solution filtrate had very high lithium concentrations of 37 g/L and 36.8 g/L, respectively, which indicates that a large amount of lithium was contained.

Therefore, in order to recover the lithium, the lithium hydroxide filtrate and the lithium hydroxide washing solution filtrate were mixed at room temperature, and 351 g of sodium phosphate was added to 1 L of the mixed solution to precipitate lithium phosphate.

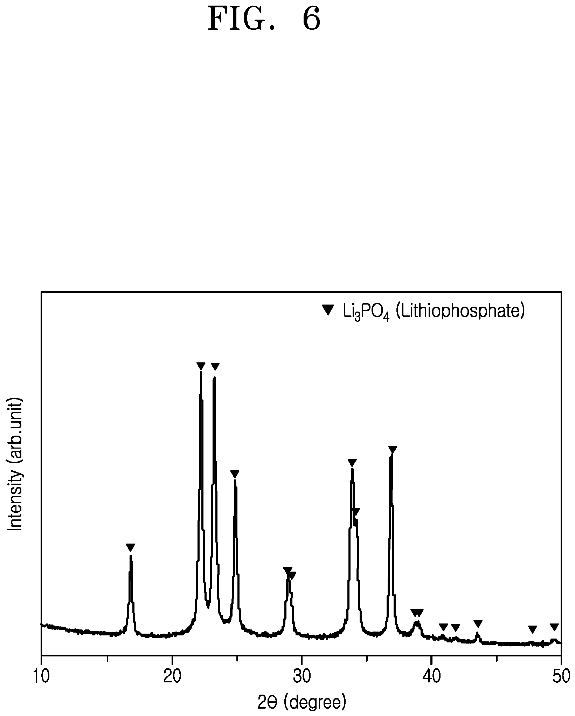

The precipitated lithium phosphate was filtered, washed, and dried, and subsequently, a mineral phase thereof was analyzed using an X-ray diffraction analyzer, and the results are shown in FIG. 6.

As shown in Table 5, as a result of precipitating lithium phosphate by adding sodium phosphate to the lithium hydroxide filtrate and the lithium hydroxide washing solution filtrate, lithium was recovered with a high recovery rate of 98.1%.

Therefore, since most of the lithium contained in the lithium hydroxide filtrate and the washing solution filtrate was recovered in the form of lithium phosphate at room temperature, it was possible to effectively prevent a large amount of lithium loss that may occur in the lithium hydroxide production process with simple equipment at low energy costs.

### [Example 6]

A lithium carbonate slurry prepared by adding sodium carbonate to the lithium hydroxide filtrate and the lithium hydroxide washing solution filtrate of Example 4 was filtered and thus separated into lithium carbonate precipitate and a filtrate.

To wash the filtered lithium carbonate, 100 g of lithium carbonate and 100 ml of distilled water were mixed and stirred. After stirring for one hour, a lithium carbonate washing solution was filtered and thus separated into lithium carbonate and a washing solution filtrate. The lithium concentration of the lithium carbonate filtrate and the washing solution filtrate was analyzed, and the results are shown in Table 6.

**[Table 6]**

| Classification | Lithium concentration (mg/L) |
|---|---|
| Lithium carbonate filtrate | 2,900 |
| Lithium carbonate washing solution filtrate | 2,450 |

It was observed that the lithium carbonate filtrate and the lithium carbonate washing solution filtrate contained lithium and had lithium concentrations of 2.9 g/L and 2.45 g/L, respectively.

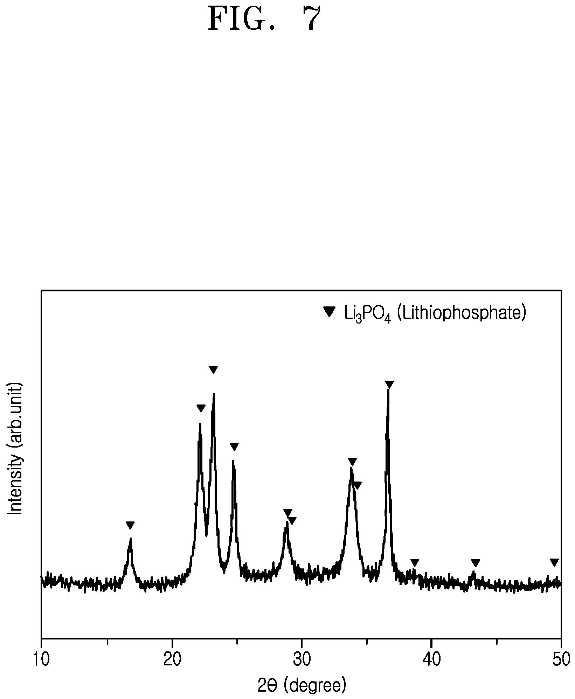

Therefore, in order to recover lithium therefrom, the lithium carbonate filtrate and the lithium carbonate washing solution filtrate were mixed. After adding 26 g/L of sodium phosphate to the mixed solution, the resultant was stirred at room temperature for four hours to precipitate lithium phosphate. The precipitated lithium phosphate was filtered, washed, and dried, and subsequently, a mineral phase thereof was analyzed using an X-ray diffraction analyzer, and the results are shown in FIG. 7.

The following Table 7 shows the lithium concentration of the mixed solution of the lithium carbonate filtrate and the washing solution filtrate and the lithium concentration of a reaction solution filtrate after adding, in order to recover lithium contained in the mixed solution, 26 g of sodium phosphate to 1 L of the mixed solution and stirring at room temperature for four hours and thereby precipitating lithium phosphate.

**[Table 7]**

| Classification | Lithium concentration (mg/L) |
|---|---|
| Mixed solution of lithium carbonate filtrate and lithium carbonate washing solution filtrate | 2,680 |
| Mixed solution of lithium carbonate filtrate and lithium carbonate washing solution filtrate, after adding sodium phosphate | 790 |
| Lithium recovery rate | 70% |

As shown in Table 7, as a result of precipitating lithium phosphate by adding sodium phosphate to the lithium carbonate precipitation filtrate and the lithium carbonate washing solution filtrate, lithium was recovered with a high recovery rate of 70%.

Therefore, since most of the lithium contained in the lithium carbonate filtrate and the washing solution filtrate was recovered in the form of lithium phosphate at room temperature, it was possible to effectively prevent lithium loss that may occur in the lithium hydroxide production process with simple equipment at low energy costs.

The present invention is not limited to the exemplary embodiments described above and can be modified into various different forms, and it can be understood by those of ordinary skill in the art to which the present invention pertains that the exemplary embodiments can be implemented in other specific forms without changing the technical spirit or essential features of the present invention. Therefore, it should be understood that the exemplary embodiments described above are exemplary in all respects and not restrictive.

## Claims

1. A method of producing lithium hydroxide, comprising the steps of:
preparing lithium carbonate and calcium hydroxide; and
reacting the lithium carbonate and the calcium hydroxide in a solvent and thus obtaining an aqueous lithium hydroxide solution,
wherein, in the step of reacting the lithium carbonate and the calcium hydroxide in a solvent and thus obtaining an aqueous lithium hydroxide solution, a concentration of lithium carbonate in the solvent is 110 g/L or less.

2. The method of claim 1, wherein the concentration of lithium carbonate in the solvent is in the range of 25 g/L to 110 g/L.

3. The method of claim 1, wherein the concentration of lithium carbonate in the solvent is in the range of 25 g/L to 80 g/L.

4. The method of claim 1, wherein the concentration of calcium hydroxide in the solvent is in the range of 27 g/L to 115 g/L.

5. The method of claim 1, wherein, in the step of reacting the lithium carbonate and the calcium hydroxide in a solvent and thus obtaining an aqueous lithium hydroxide solution, a reaction time is in the range of one to five hours.

6. The method of claim 1, wherein, in the step of reacting the lithium carbonate and the calcium hydroxide in a solvent and thus obtaining an aqueous lithium hydroxide solution, a reaction temperature is room temperature.

7. The method of claim 1, further comprising the steps of:
concentrating the aqueous lithium hydroxide solution and separating the same into solid lithium hydroxide and a first filtrate; and
recovering lithium from the first filtrate,
after the step of reacting the lithium carbonate and the calcium hydroxide in a solvent and thus obtaining an aqueous lithium hydroxide solution.

8. The method of claim 7, further comprising the steps of:
washing the solid lithium hydroxide; and
recovering lithium from a filtrate of a washing solution used for washing the lithium hydroxide,
after the step of concentrating the aqueous lithium hydroxide solution and separating the same into solid lithium hydroxide and a first filtrate.

9. The method of claim 7 or claim 8, wherein the step of recovering lithium from the first filtrate or the step of recovering lithium from a filtrate of a washing solution used for washing the lithium hydroxide includes a step of adding a carbonic acid feed material to the first filtrate or the filtrate of the washing solution and thus recovering lithium in the form of lithium carbonate.

10. The method of claim 9, further comprising the steps of:
separating solid lithium carbonate and a second filtrate;
washing the solid lithium carbonate; and
recovering lithium from the second filtrate or a filtrate of a washing solution used for washing the solid lithium carbonate,
after the step of adding a carbonic acid feed material to the first filtrate or the filtrate of the washing solution and thus recovering lithium in the form of lithium carbonate.

11. The method of claim 10, wherein the step of recovering lithium from the second filtrate or a filtrate of a washing solution used for washing the solid lithium carbonate includes a step of adding a phosphorus feed material to the second filtrate or the filtrate of the washing solution used for washing the solid lithium carbonate and thus recovering lithium in the form of lithium phosphate.

12. The method of claim 7 or claim 8, wherein the step of recovering lithium from the first filtrate or the step of recovering lithium from a filtrate of a washing solution used for washing the lithium hydroxide includes a step of adding a phosphorus feed material to the first filtrate or the filtrate of the washing solution and thus recovering lithium in the form of lithium phosphate.
